# EUROPEAN PATENT SPECIFICATION

(11) **EP 2 624 416 B1**
(45) Date of publication and mention of the grant of the patent: **17.09.2014**
(21) Application number: 12000680.4
(22) Date of filing: 01.02.2012
(51) Int. Cl.: H02K 1/30, H02K 7/14, B02C 17/24, B02C 17/10

(54) **A gearless drive for a rotating electrical machine**
Getriebeloser Antrieb für elektrische Rotationsmaschine
Entraînement direct pour machine électrique rotative

(43) Date of publication of application: 07.08.2013
(73) Proprietor: GE Energy Power Conversion Technology Limited, Rugby Warwickshire CV21 1BU (GB)
(72) Inventor: Bradley, Stuart Ian, Lutterworth Leicestershire LE17 5AJ (GB)
(74) Representative: Serjeants LLP

(56) References cited:
- EP-A2- 2 387 132
- GB-A- 1 484 967
- SU-A1- 740 280
- US-A- 3 272 444
- US-A- 3 555 329
- US-A- 4 283 648

## Description

### TECHNICAL FIELD

The present disclosure relates to a gearless drive for a rotating electrical machine, and more particularly to a gearless mill drive (GMD) for a grinding mill such as an autogenous (AG) mill or a semi-autogenous (SAG) mill.

### TECHNICAL BACKGROUND

Grinding mills are widely used in mineral processing applications and the most common types are the autogenous (AG) grinding mill in which the feed material itself acts as the grinding medium and the semi-autogenous (SAG) grinding mill in which supplementary grinding material, typically steel balls, is added to the feed material.

Many grinding mills employ a gearless mill drive (GMD), also commonly known as a ring motor, in which the mill barrel acts as the rotor and a stator surrounds the rotor. The mill barrel commonly includes a rigid circumferentially extending pole mounting flange and the pole bodies similarly include a rigid circumferentially extending pole support flange. The pole bodies are mounted on the rotor by rigidly bolting together the pole mounting flange and pole support flange.

Grinding mills are often subjected to transient loads in the radial, axial and circumferential directions, particularly during start-up if the material in the mill has settled and formed what is commonly referred to as a 'frozen charge'. These transient loads have been known to cause fatigue damage to some of the component parts of the rotor assembly of existing gearless mill drives, and torsional shock loads can be particularly problematic.

There is, therefore, a need for an improved gearless drive for a rotating electrical machine, and in particular a gearless mill drive for a grinding mill, which reduces the damage that can arise as a result of transient loads such as torsional shock loads. The preamble of claim 1 is derivable from US 4,283,648 and EP 2387132 A2.

### SUMMARY OF THE DISCLOSURE

According to one aspect of the present disclosure, there is provided a gearless drive for a rotating electrical machine, the gearless drive comprising:
a rotor in the form of a hollow rotatable body and having an axis of rotation;
a stator surrounding the rotor;
a plurality of pole bodies mounted circumferentially around the rotor;
a pole mounting arrangement for mounting the pole bodies on the rotor;
wherein the stiffness of the pole mounting arrangement in the radial direction is greater than the stiffness of the pole mounting arrangement in the circumferential direction.

The terms 'radial', 'circumferential' and 'axial' are used herein to refer to directions relative to the axis of rotation of the rotor.

The high stiffness of the mounting arrangement in the radial direction minimises any purely radial movement between the pole bodies and the rotor. Air gap control is thus maintained notwithstanding the strong magnetic forces. For example, in embodiments in which the air gap between the rotor and the stator is approximately 6mm, the stiffness of the mounting arrangement in the radial direction may limit purely radial movement of the pole bodies with respect to the rotor to a maximum of approximately 0.1mm.

The lower stiffness of the mounting arrangement in the circumferential direction permits a predetermined amount of circumferential movement between the pole bodies and the rotor. This provides the gearless drive with improved torsional flexibility and damping when compared to existing gearless drives, such as the GMDs described above, in which the pole bodies are rigidly mounted on the rotor. Transient loads, and in particular torsional shock loads, are thus absorbed very effectively by the pole mounting arrangement. For example, in the foregoing embodiment in which purely radial movement of the pole bodies with respect to the rotor is limited to approximately 0.1mm, circumferential movement of the pole bodies with respect to the rotor may be possible up to approximately 5mm.

The stiffness of the pole mounting arrangement in the axial direction may be lower than the stiffness of the pole mounting arrangement in the radial direction. Selective movement of the pole bodies in the axial direction with respect to the rotor may thus be possible and this may facilitate axial alignment of the rotor with respect to the stator, for example during assembly or maintenance of the gearless drive.

The pole mounting arrangement may include a plurality of pole mounting struts which may extend in a substantially radial direction. Each pole body may be mounted on the rotor by at least one of said pole mounting struts. Each pole body is normally mounted on the rotor by at least two circumferentially spaced pole mounting struts. The use of at least two circumferentially spaced pole mounting struts may improve the stability of the pole bodies and hence the gearless drive.

Each pole mounting strut may include a length adjustment mechanism, for example a turnbuckle. The length adjustment mechanism allows the length of the pole mounting struts to be varied, and hence allows variation of the radial position of the pole bodies with respect to the rotor. This advantageously allows adjustment and optimisation of the air gap between the pole bodies and the stator.

Opposite ends of each pole mounting strut are typically secured to the pole body and the rotor by bushes. The stiffness of the bushes may be greater in the radial direction than the circumferential direction. The stiffness of the bushes may be lower in the axial direction than the radial direction. The bushes thus permit the aforesaid relative movement between the pole bodies and the rotor in the circumferential direction and possibly also in the axial direction, whilst minimising any purely radial movement.

The mounting arrangement may be arranged to permit movement of the pole bodies in a radially inward direction, towards the rotor, during circumferential movement of the pole bodies with respect to the rotor. More particularly, each mounting strut may be arranged to permit movement of its associated pole body in a radially inward direction, towards the rotor, during circumferential movement of the pole body with respect to the rotor. Each pole body may move about an arc whose diameter is less than the diameter of the rotor. As indicated above, any movement in the purely radial direction is minimised. The radially inward and circumferential movement of each pole body with respect to the rotor provides a slight increase in the size of the air gap, and hence a reduction in the magnetic forces, in the event that torsional shock loads are encountered. This reduction in the magnetic forces further contributes to the absorption of torsional shock loads, particularly during the start-up phase of the rotating electrical machine.

The pole mounting arrangement may include a plurality of drive links for transmitting torque from the pole bodies to the rotor. At least one of said drive links may extend between each pole body and the rotor. Each drive link may be aligned in a substantially circumferential direction. The substantially circumferential alignment facilitates the transmission of torque from each pole body to the rotor to thereby rotate the rotor. The drive links may be arranged to allow movement of the pole bodies in the radial direction with respect to rotor, although as explained above, such radial movement is only possible simultaneously with circumferential movement of the pole bodies with respect to the rotor. The drive links may be arranged to allow movement of the pole bodies in the axial direction with respect to rotor. This may facilitate axial alignment of the rotor with respect to the stator, as discussed above.

Opposite ends of each drive link are typically secured to the pole body and the rotor by bushes. The stiffness of the bushes may be greater in the circumferential direction than the radial direction. The stiffness of the bushes may be lower in the axial direction than the circumferential direction. The bushes thus permit the aforesaid relative movement between the pole bodies and the rotor in the radial direction and possibly also in the axial direction, whilst minimising any relative movement in the substantially circumferential direction to ensure the effective transmission of torque from the pole bodies to the rotor.

The rotating electrical machine may be a grinding mill in which the hollow rotatable body may be a mill barrel. Accordingly, the gearless drive may be a gearless mill drive (GMD).

The mill barrel may include a pole mounting flange and the pole mounting arrangement may extend between the pole mounting flange and each pole body to thereby provide flexible mounting of the pole bodies on the pole mounting flange of the rotor. More particularly, each mounting link may extend between the pole mounting flange and an associated pole body to thereby mount the pole bodies on the pole mounting flange of the rotor. It will, therefore, be understood that the mounting arrangement replaces the rigid pole support flange that is employed in existing GMDs such as those described above.

### BRIEF DESCRIPTION OF THE DRAWINGS

Figures 1a and 1b are partially cut-away diagrammatic perspective views of a grinding mill including a gearless drive according to the present disclosure;
Figure 2 is a diagrammatic perspective view of the gearless drive of Figure 1;
Figure 3 is an enlarged perspective view of part of the gearless drive of Figure 2; and
Figure 4 is a diagrammatic view from one end of the part of the gearless drive shown in Figure 3.

### DETAILED DESCRIPTION OF EMBODIMENTS

Embodiments will now be described by way of example only and with reference to the accompanying drawings.

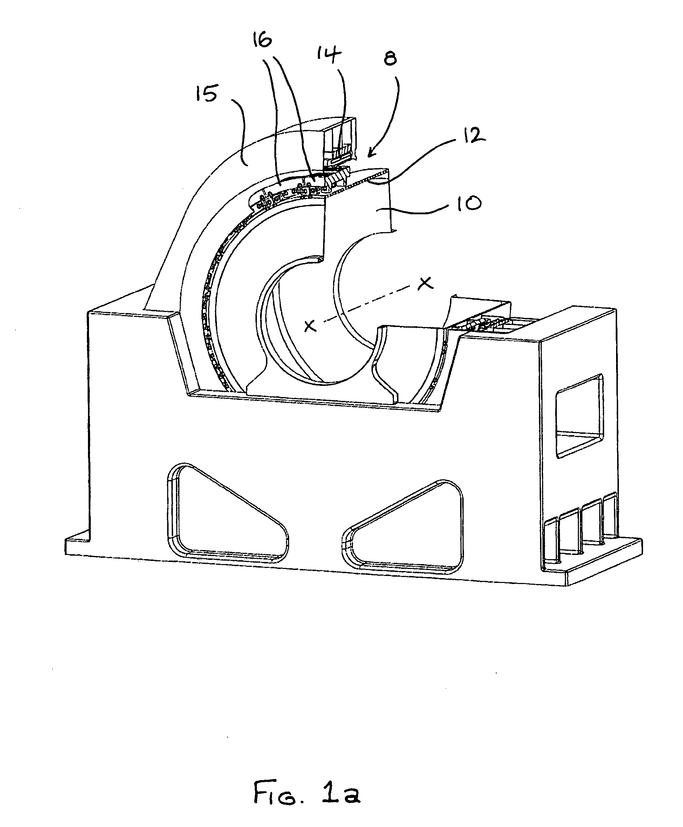

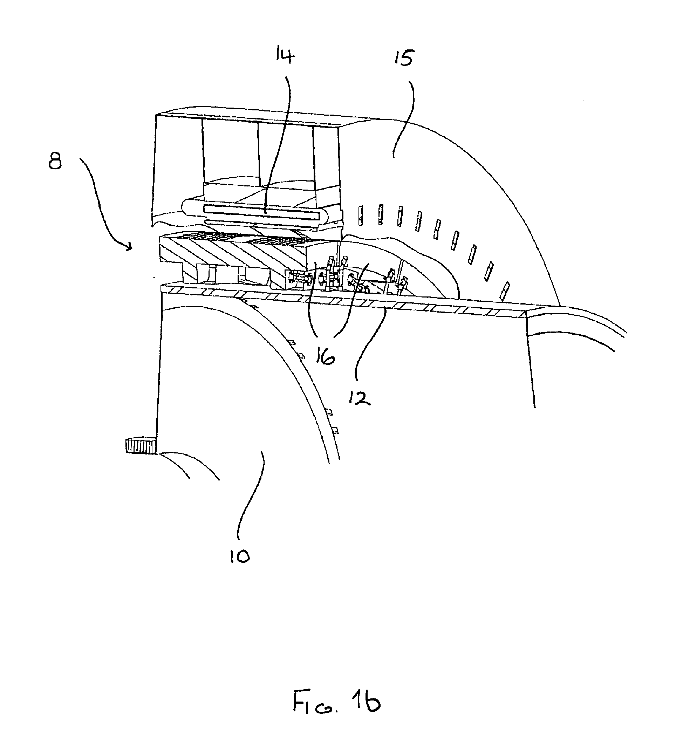

Referring initially to Figures 1a and 1b, there is shown a grinding mill which employs a gearless mill drive (GMD) 8 to drive a hollow rotatable mill barrel 10 in which feed material is ground by rotation of the mill barrel 10 about an axis of rotation X-X. The mill barrel acts as the rotor 12 of the gearless mill drive 8 and is surrounded by a stator 14 typically formed by a plurality of stator segments. The stator 14 is fixed to a support frame 15.

A plurality of pole bodies 16 are mounted at circumferentially spaced positions around the rotor 12. A plurality of permanent magnets are affixed to an upper, and in use radially outer, surface of the pole bodies 12, for example by bonding, by way of mechanical fixings or by any other suitable means. Alternatively, the permanent magnets could be located in a housing which could be secured to the upper, and in use radially outer, surface of the pole bodies 16.

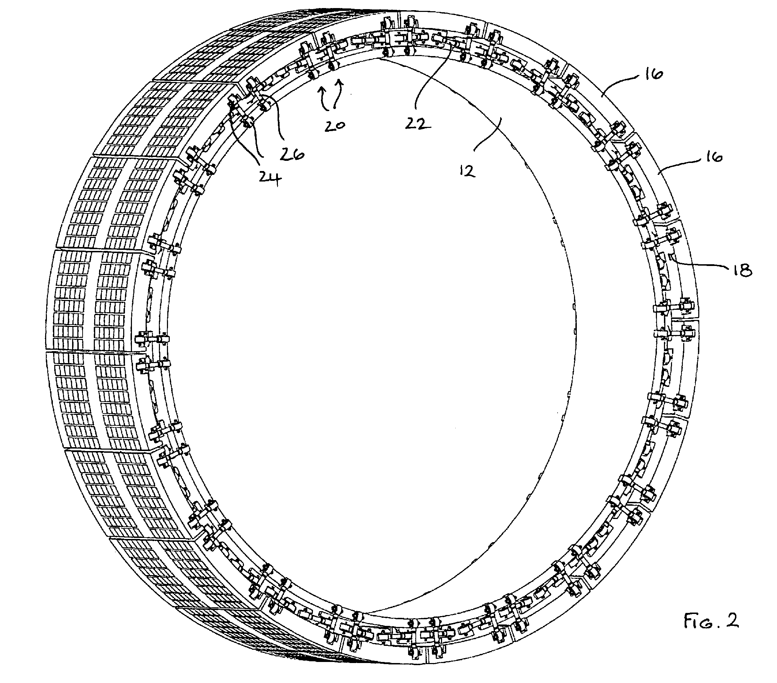

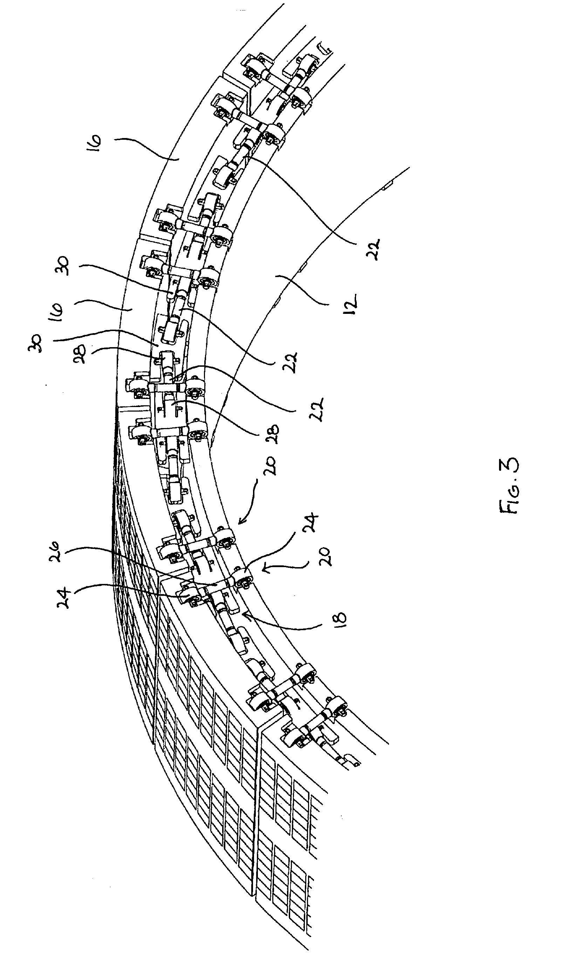

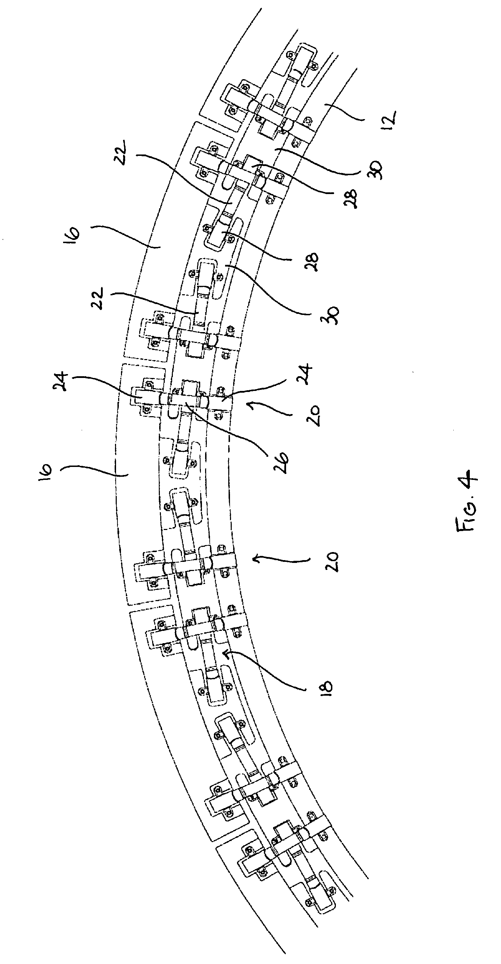

Referring in particular to Figures 2 to 4, the pole bodies 16 are mounted on the rotor 12 by a pole mounting arrangement 18 comprising a plurality of substantially radially extending pole mounting struts 20 and a plurality of generally circumferentially extending drive links 22.

In the illustrated embodiment, each pole body 16 is mounted on the rotor 12 by two axial pairs of circumferentially spaced substantially radially extending pole mounting struts 20, thereby maximising the stability of each pole body 16. Bushes 24 are provided at opposite ends of each pole mounting strut 20 and have a substantially higher stiffness in the radial direction than in either of the circumferential or axial directions. As a consequence, movement of the pole bodies 16 relative to the rotor 12 in the purely radial direction is prevented or at least substantially minimised. On the other hand, some limited predetermined movement of the pole bodies 16 relative to the rotor 12 in the generally circumferential direction is permitted and this advantageously provides the gearless mill drive with improved torsional flexibility and damping as already discussed. Likewise, the lower stiffness of the bushes in the axial direction permits some limited movement of the pole bodies 16 relative to the rotor 12 in the axial direction. This may facilitate alignment of the pole bodies 16 with the stator 14, especially during assembly or maintenance of the gearless mill drive.

Although movement of the pole bodies 16 relative to the rotor 12 in the purely radial direction is prevented or substantially minimised by the pole mounting struts 20, when the pole bodies 16 move in the circumferential direction they move about an arc of smaller diameter than the diameter of the rotor 12 and, hence, move simultaneously in the radially inward direction away from the stator 14. This increases the size of the air gap between the pole bodies 16 and the stator 14 and thereby reduces the magnetic forces.

Each pole mounting strut includes 20 includes a length adjustment mechanism in the form of a turnbuckle 26 which enables the length of the strut 20 and, hence, the distance between the bushes 24 to be suitably adjusted. This enables the radial position of the pole bodies 16 to be varied and, hence, enables the size of the air gap between the pole bodies 16 and the stator 14 to be optimised.

The generally circumferentially extending drive links 22 are provided to transmit torque from the pole bodies 16 to the rotor 12 and in the illustrated embodiment two drive links 22 couple each pole body 16 to the rotor 12 and are mounted to the pole body 16 and the rotor 12 via suitable bushes 28, which are provided at opposite ends of each drive link 22, and associated support plates 30. The bushes 28 have a relatively high stiffness in the substantially circumferential direction, in line with each drive link 22, to ensure that torque is transmitted effectively from the pole bodies 16 to the rotor 12, although the stiffness is selected such that the overall stiffness of the pole mounting arrangement 18 in the radial direction is greater than the stiffness in the circumferential direction for the reasons discussed above. The stiffness of the bushes 28 is lower in the radial and axial directions than in the circumferential direction so that some limited movement is possible in these directions.

The radially extending pole mounting struts 20 and generally circumferentially extending drive links 22 provide for semi-flexible mounting of the pole bodies 16 on the rotor 12 with the result that the gearless mill drive is capable of absorbing transient loads, and especially torsional shock loads, in an effective manner. This is particularly useful in reducing fatigue damage.

Although not illustrated, in some embodiments the mill barrel 10 includes a conventional pole mounting flange in which case the pole mounting struts 20 and drive links 22 extend between the pole mounting flange and each pole body 16 to thereby provide flexible mounting of the pole bodies 16 on the pole mounting flange of the rotor 12.

Although exemplary embodiments have been described in the preceding paragraphs, it should be understood that various modifications may be made to those embodiments without departing from the scope of the appended claims. Thus, the breadth and scope of the claims should not be limited to the above-described exemplary embodiments. Each feature disclosed in the specification, including the claims and drawings, may be replaced by alternative features serving the same, equivalent or similar purposes, unless expressly stated otherwise.

For example, the pole bodies 16 may carry magnetic field coils instead of permanent magnets. Although the description above relates specifically to a gearless mill drive (GMD), the disclosure is equally applicable to gearless drives for other rotating electrical machines that are subject to transient loads, one such example being a wind turbine generator.

Unless the context clearly requires otherwise, throughout the description and the claims, the words "comprise", "comprising", and the like, are to be construed in an inclusive as opposed to an exclusive or exhaustive sense; that is to say, in the sense of "including, but not limited to".

## Claims

1. A gearless drive (8) for a rotating electrical machine comprising:
a rotor (12) in the form of a hollow rotatable body (10) and having an axis of rotation;
a stator (14) surrounding the rotor (12);
a plurality of pole bodies (16) mounted circumferentially around the rotor (12);
**characterised in that** a pole mounting arrangement (18) is provided for independently mounting each of the pole bodies (16) on the rotor (12);
wherein the stiffness of the pole mounting arrangement (18) in the radial direction is greater than the stiffness of the pole mounting arrangement (18) in the circumferential direction.

2. A gearless drive according to claim 1, wherein the stiffness of the pole mounting arrangement (18) in the axial direction is less than the stiffness of the pole mounting arrangement (18) in the radial direction.

3. A gearless drive according to claim 1 or claim 2, wherein the pole mounting arrangement (18) includes a plurality of pole mounting struts (20) and each pole body (16) is mounted on the rotor (12) by at least one of said pole mounting struts (20).

4. A gearless drive according to claim 3, wherein each pole mounting strut (20) extends in a substantially radial direction.

5. A gearless drive according to claim 3 or claim 4, wherein opposite ends of each pole mounting strut (20) are secured to the pole body (16) and the rotor (12) by bushes (24) whose stiffness in the radial direction is greater than their stiffness in the circumferential direction.

6. A gearless drive according to claim 5, wherein the stiffness of the bushes (24) in the axial direction is lower than the stiffness of the bushes (24) in the radial direction.

7. A gearless drive according to any of claims 3 to 6, wherein each pole mounting strut (20) is arranged to permit movement of its associated pole body (16) in a radially inward direction, towards the rotor (12), during circumferential movement of the pole body (16) with respect to the rotor (12).

8. A gearless drive according to any of claims 3 to 7, wherein each pole mounting strut (20) includes a length adjustment mechanism (26).

9. A gearless drive according to any preceding claim, wherein the pole mounting arrangement (18) includes a plurality of drive links (22) for transmitting torque from the pole bodies (16) to the rotor (12), at least one of said drive links (22) extending between each pole body (16) and the rotor (12).

10. A gearless drive according to claim 9, wherein each drive link (22) is aligned in the substantially circumferential direction.

11. A gearless drive according to any preceding claim, wherein the rotating electrical machine is a grinding mill in which the hollow rotatable body is a mill barrel (10).

## Patentansprüche

1. Getriebeloser Antrieb (8) für eine elektrische Rotationsmaschine, aufweisend:
einen Rotor (12) in der Form eines hohlen drehbaren Körpers (10) und mit einer Rotationsachse;
einen den Rotor (12) umgebenden Stator (14);
mehrere längs des Umfangs um den Rotor (12) herum befestigte Polkörper (16);
**dadurch gekennzeichnet, dass** eine Polbefestigungsanordnung (18) zur unabhängigen Befestigung jedes Polkörpers (16) an dem Rotor (12) vorgesehen ist;
wobei die Steifigkeit der Polbefestigungsanordnung (18) in der radialen Richtung größer als die Steifigkeit der Polbefestigungsanordnung (18) in der Umfangsrichtung ist.

2. Getriebeloser Antrieb nach Anspruch 1, wobei die Steifigkeit der Polbefestigungsanordnung (18) in der axialen Richtung geringer als die Steifigkeit der Polbefestigungsanordnung (18) in der radialen Richtung ist.

3. Getriebeloser Antrieb nach Anspruch 1 oder Anspruch 2, wobei die Polbefestigungsanordnung (18) mehrere Polbefestigungstreben (20) enthält und jeder Polkörper (16) an dem Rotor (12) durch wenigstens eine von den Polbefestigungsstreben (20) befestigt ist.

4. Getriebeloser Antrieb nach Anspruch 3, wobei sich jede Polbefestigungstrebe (20) in einer im Wesentlichen radialen Richtung erstreckt.

5. Getriebeloser Antrieb nach Anspruch 3 oder Anspruch 4, wobei gegenüberliegende Enden jeder Polbefestigungstrebe (20) an dem Polkörper (16) und dem Rotor (12) durch Buchsen (24) gesichert sind, deren Steifigkeit in der radialen Richtung größer als deren Steifigkeit in der Umfangsrichtung ist.

6. Getriebeloser Antrieb nach Anspruch 5, wobei die Steifigkeit der Buchsen (24) in der axialen Richtung geringer als die Steifigkeit der Buchsen (24) in der radialen Richtung ist.

7. Getriebeloser Antrieb nach einem beliebigen der Ansprüche 3 bis 6, wobei jede Polbefestigungstrebe (20) so eingerichtet ist, dass sie eine Bewegung ihres zugeordneten Polkörpers (16) in einer radialen Richtung nach zu dem Rotor (12) hin während einer Umfangsbewegung des Polkörpers (16) in Bezug auf den Rotor (12) zulässt.

8. Getriebeloser Antrieb nach einem beliebigen der Ansprüche 3 bis 7, wobei jede Polbefestigungstrebe (20) einen Längeneinstellmechanismus (26) enthält.

9. Getriebeloser Antrieb nach einem beliebigen der vorstehenden Ansprüche, wobei die Polbefestigungsanordnung (18) mehrere Antriebsverbindungsteile (22) zur Übertragung von Drehmoment von den Polkörpern (16) auf den Rotor (12) enthält, wobei sich wenigstens eines von den Antriebsverbindungsteilen (22) zwischen jedem Polkörper (16) und dem Rotor (12) erstreckt.

10. Getriebeloser Antrieb nach Anspruch 9, wobei jedes Antriebsverbindungsteil (22) im Wesentlichen in der Umfangsrichtung ausgerichtet ist.

11. Getriebeloser Antrieb nach einem beliebigen der vorstehenden Ansprüche, wobei die elektrische Rotationsmaschine eine Mahlanlage ist, in der der hohle drehbare Körper eine Mahltrommel (10) ist.

## Revendications

1. Dispositif d'entraînement direct (8) pour faire tourner une machine électrique, comportant :
un rotor (12) sous la forme d'un corps rotatif creux (10) et ayant un axe de rotation ;
un stator (14) entourant le rotor (12) ;
une pluralité de corps polaires (16) montés sur le pourtour du rotor (12) ;
**caractérisé en ce qu'**un système de montage (18) de pôles est prévu pour monter indépendamment chacun des corps polaires (16) sur le rotor (12) ;
la rigidité du système de montage (18) de pôles dans la direction radiale étant supérieure à la rigidité du système de montage (18) de pôles dans la direction circonférentielle.

2. Dispositif d'entraînement direct selon la revendication 1, dans lequel la rigidité du système de montage (18) de pôles dans la direction axiale est inférieure à la rigidité du système de montage (18) de pôles dans la direction radiale.

3. Dispositif d'entraînement direct selon la revendication 1 ou la revendication 2, dans lequel le système de montage (18) de pôles comprend une pluralité de supports de montage (20) de pôles et chaque corps polaire (16) est supporté sur le rotor (12) par au moins un desdits supports de montage (20) de pôles.

4. Dispositif d'entraînement direct selon la revendication 3, dans lequel chaque support de montage (20) de pôle s'étend dans une direction sensiblement radiale.

5. Dispositif d'entraînement direct selon la revendication 3 ou la revendication 4, dans lequel des extrémités opposées de chaque support de montage (20) de pôle sont fixées au corps polaire (16) et au rotor (12) par des bagues (24) dont la rigidité dans la direction radiale est supérieure à leur rigidité dans la direction circonférentielle.

6. Dispositif d'entraînement direct selon la revendication 5, dans lequel la rigidité des bagues (24) dans la direction axiale est inférieure à la rigidité des bagues (24) dans la direction radiale.

7. Dispositif d'entraînement direct selon l'une quelconque des revendications 3 à 6, dans lequel chaque support de montage (20) de pôle est conçu pour permettre à son corps polaire correspondant (16) de bouger radialement vers l'intérieur, en direction du rotor (12), pendant un mouvement circonférentiel du corps polaire (16) par rapport au rotor (12).

8. Dispositif d'entraînement direct selon l'une quelconque des revendications 3 à 7, dans lequel chaque support de montage (20) de pôle comprend un mécanisme de réglage de longueur (26).

9. Dispositif d'entraînement direct selon l'une quelconque des revendications précédentes, dans lequel le système de montage (18) de pôles comprend une pluralité de maillons d'entraînement (22) servant à transmettre un couple des corps polaires (16) au rotor (12), au moins un desdits maillons d'entraînement (22) s'étendant entre chaque corps polaire (16) et le rotor (12).

10. Dispositif d'entraînement direct selon la revendication 9, dans lequel chaque maillon d'entraînement (22) est aligné dans la direction sensiblement circonférentielle.

11. Dispositif d'entraînement direct selon l'une quelconque des revendications précédentes, dans lequel la machine électrique tournante est un broyeur dans lequel le corps rotatif creux est un tambour (10) de broyeur.
